# EUROPÄISCHE PATENTSCHRIFT

(11) **EP 2 291 717 B1**
(45) Veröffentlichungstag und Bekanntmachung des Hinweises auf die Patenterteilung: **08.08.2018**
(21) Anmeldenummer: 09769152.1
(22) Anmeldetag: 16.06.2009
(51) Int. Cl.: G05D 16/06, F01M 13/00

(54) **DRUCKREGELVENTIL**
PRESSURE CONTROL VALVE
SOUPAPE DE RÉGULATION DE PRESSION

(30) Priorität: 25.06.2008 DE 102008030203
(43) Veröffentlichungstag der Anmeldung: 09.03.2011
(73) Patentinhaber: Mahle International GmbH, 70376 Stuttgart (DE)
(72) Erfinder: GOERLICH, Leszek, 71229 Leonberg (DE); RUPPEL, Stefan, 69126 Heidelberg-Emmertsgrund (DE); SAUTER, Hartmut, 71272 Renningen (DE)
(74) Vertreter: BRP Renaud & Partner mbB Rechtsanwälte Patentanwälte Steuerberater
(86) Internationale Anmeldenummer: PCT/EP2009/057458
(87) Internationale Veröffentlichungsnummer: WO 2009/156303

(56) Entgegenhaltungen:
- DE-A1- 4 413 322
- DE-A1- 19 615 865
- DE-U1-202004 015 872

## Beschreibung

Die vorliegende Erfindung betrifft ein Druckregelventil, insbesondere zum Einstellen eines Unterdrucks in einem Kurbelgehäuse einer Brennkraftmaschine, mit den Merkmalen des Oberbegriffs des Anspruchs 1.

Aus der DE 196 15 865 A1 ist ein Druckregelventil dieser Art bekannt. Das Druckregelventil weist ein Gehäuse auf, das eine mit einer Sauganlage einer Brennkraftmaschine verbindbare erste Öffnung und eine mit einem Kurbelgehäuse der Brennkraftmaschine verbindbare zweite Öffnung aufweist. Im Ventilgehäuse ist ein Ventilglied angeordnet, das zum Steuern eines durchströmbaren Querschnitts eines die erste Öffnung mit der zweiten Öffnung verbindenden Gaspfads hubverstellbar ist. Das Ventilglied besitzt einen Trägerkörper, der eine erste Membran und eine zweite Membran aufweist. Die erste Membran trennt im Ventilgehäuse einen mit der ersten Öffnung und mit der zweiten Öffnung kommunizierenden ersten Raum gasdicht von einem zweiten Raum, der mit einer dritten Öffnung des Ventilgehäuses kommuniziert, die mit der Umgebung des Druckregelventils verbunden ist. Im Unterschied dazu trennt die zweite Membran im Ventilgehäuse den zweiten Raum gasdicht von einem dritten Raum, der durch das Ventilglied hindurch mit dem ersten Raum kommuniziert. Beim bekannten Druckregelventil ist die erste Membran an den Trägerkörper angespritzt, während die zweite Membran separat hergestellt ist und eine zentrale Öffnung aufweist, in welche ein hohler Zapfenabschnitt des Trägerkörpers eingesteckt ist.

Aus der US 4,267,855 ist ein anderes Druckregelventil bekannt, das beispielsweise zum Einstellen einer Abgasrückführrate verwendet werden kann. Im Ventilgehäuse ist wieder ein Ventilglied angeordnet, mit dessen Hilfe ein von einer ersten Öffnung zu einer zweiten Öffnung führender Gaspfad gesteuert werden kann. Das Ventilglied ist mit einer ersten Membran und einer zweiten Membran versehen, wobei die erste Membran den Gaspfad gegenüber einem mit der Umgebung kommunizierenden Umgebungsdruckraum gasdicht trennt, während die zweite Membran den Gaspfad von einem Steuerdruckraum trennt, der mit einer Druckquelle verbunden ist, die einen Steuerdruck bereitstellt, in dessen Abhängigkeit der Gaspfad gesteuert werden soll. Bei diesem Druckregelventil werden die zwei Membranen separat hergestellt und jeweils für sich an einem Trägerkörper des Ventilglieds angebracht.

Aus der DE 40 22 129 A1 ist ein weiteres Druckregelventil bekannt, mit dessen Hilfe beispielsweise ein Kurbelgehäuse entlüftet werden kann. Sein Ventilglied weist nur eine einzige Membran auf, die in einem Ventilgehäuse den Gaspfad von einem Umgebungsdruckraum gasdicht trennt, der mit der Umgebung kommuniziert. Aus der DE 202004015872 U1 ist ein weiteres Druckregelventil dieser Art bekannt.

Die vorliegende Erfindung beschäftigt sich mit dem Problem, für ein Druckregelventil der eingangs genannten Art eine verbesserte Ausführungsform anzugeben, die sich insbesondere dadurch auszeichnet, dass es preiswert herstellbar ist, wobei außerdem eine verbesserte Funktionalität angestrebt ist.

Erfindungsgemäß wird dieses Problem durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die beiden Membranen zu einem gemeinsamen Membrankörper zusammenzufassen, der außerdem an den Trägerkörper angespritzt ist. Ein separates Herstellen und Montieren der Membranen am Trägerkörper kann somit entfallen. Die Herstellung des Ventilglieds und somit des Druckregelventils kann dadurch vereinfacht und somit preiswerter gestaltet werden. Durch die monolithische Ausgestaltung des Membrankörpers, also durch seine einstückige, integrale Herstellung mit beiden Membranen, lässt sich auch insgesamt die Dichtungswirkung verbessern, da beispielsweise auf eine Dichtung zwischen den beiden Membranen verzichtet werden kann. Des weiteren begrenzen beide Membranen jeweils den zweiten Raum. Durch die integrale Bauweise der beiden Membranen lässt sich eine erhöhte Dichtigkeit für die Begrenzung des zweiten Raums realisieren.

Gemäß einer vorteilhaften Ausführungsform besitzt die erste Membran eine mit dem Ventilgehäuse zusammenwirkende erste Dichtung, während die zweite Membran eine mit dem Ventilgehäuse zusammenwirkende zweite Dichtung aufweist. Der Membrankörper kann nun gezielt so ausgestaltet werden, dass er den zweiten Raum von der ersten Dichtung bis zur zweiten Dichtung unterbrechungsfrei begrenzt. Die Gefahr von Leckagen kann somit signifikant reduziert werden.

Gemäß einer besonders vorteilhaften Ausführungsform kann nun vorgesehen sein, eine Querschnittsfläche einer Einfassung der ersten Öffnung etwa gleich groß auszugestalten wie eine Querschnittsfläche der zweiten Membran. Durch diese Ausgestaltung kann erreicht werden, dass über die Querschnittsfläche der Einfassung im wesentlichen keine Schließkräfte in das Ventilglied eingeleitet werden können, da diese über die Querschnittsfläche der zweiten Membran quasi eliminiert werden. Dies ist darauf zurückzuführen, dass der erste Raum durch das Ventilglied hindurch mit dem dritten Raum kommuniziert, der von der zweiten Membran begrenzt ist. In der Schließstellung des Ventilglieds wirkt der an der ersten Öffnung anliegende Druck nicht mehr auf die gesamte Querschnittsfläche der ersten Membran, sondern nur noch auf die mit der Einfassung der ersten Öffnung zusammenwirkende Teilfläche, die der Querschnittsfläche der Einfassung entspricht. In der Öffnungsrichtung wirkt dann nur eine Öffnungsdruckfeder des Druckregelventils. Diese kann z.B. durch eine progressive Federkennlinie gezielt so ausgelegt werden, dass der durchströmbare Querschnitt des Gaspfads mit zunehmender Druckdifferenz zwischen der ersten Öffnung und der dritten Öffnung zunehmend schließt, jedoch zumindest in einem vorbestimmten Regelbereich nicht vollständig schließt, so dass immer eine Absaugung von Gas von der zweiten Öffnung zur ersten Öffnung gewährleistet ist. Bei einer Verwendung des Druckregelventils in einer Kurbelgehäuseentlüftung kann somit erreicht werden, dass auch bei einem Leerlaufbetrieb der Brennkraftmaschine, also bei maximalem Unterdruck in der Sauganlage der Gaspfad geöffnet bleibt und eine hinreichende Entlüftung des Kurbelgehäuses ermöglicht.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1 und 2: jeweils eine stark vereinfachte Schnittdarstellung eines Druckregelventils, bei verschiedenen Schaltzuständen,
- Fig. 3: eine weitere Schnittdarstellung eines Druckregelventils im Bereich eines Ventilkörpers.

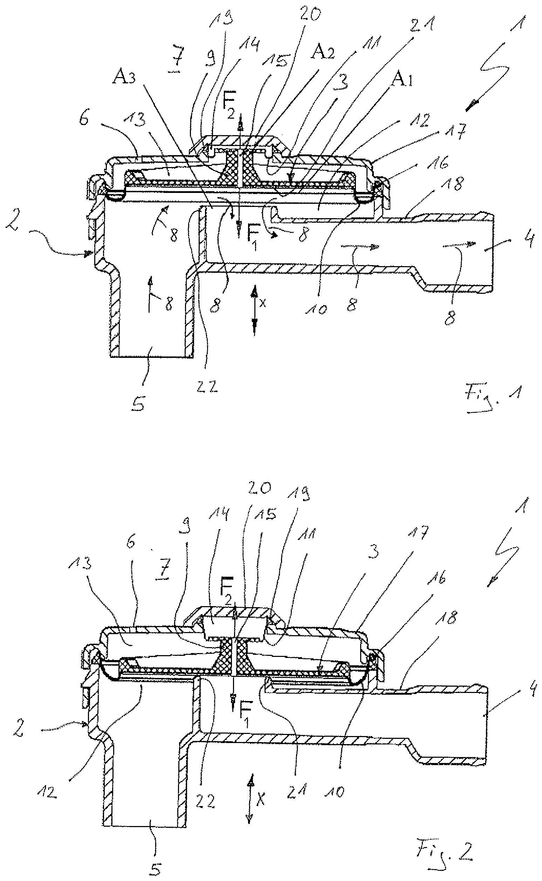

Entsprechend den Fig. 1 bis 3 umfasst ein Druckregelventil 1 ein Ventilgehäuse 2, in dem ein Ventilglied 3 hubverstellbar angeordnet ist. Die Hubrichtung des Ventilglieds 3 ist dabei in den Figuren durch einen mit x bezeichneten Doppelpfeil symbolisiert. Entsprechend einer bevorzugten Ausführungsform ist das Druckregelventil 1 so ausgestaltet, dass damit ein Unterdruck in einem Kurbelgehäuse einer Brennkraftmaschine eingestellt werden kann. In diesem Fall handelt es sich dann um ein Kurbelgehäuseentlüftungsdruckregelventil 1.

Das Ventilgehäuse 2 weist eine erste Öffnung 4, eine zweite Öffnung 5 sowie eine dritte Öffnung 6 auf. Die erste Öffnung 4 ist zum Anschluss an eine Unterdruckquelle vorgesehen. Die zweite Öffnung 5 ist zum Anschließen an einen Raum vorgesehen, dessen Unterdruck geregelt werden soll. Die dritte Öffnung 6 kommuniziert mit einer Umgebung 7 des Druckregelventils 1. Sofern es sich um ein Kurbelgehäuseentlüftungsdruckregelventil 1 handelt, ist die erste Öffnung 4 zum Anschließen an eine Frischluftleitung oder Saugleitung einer Frischluft- oder Sauganlage vorgesehen, die Frischluft zur Brennkraftmaschine transportiert. Die zweite Öffnung 5 ist dann zum Anschließen an das Kurbelgehäuse der Brennkraftmaschine vorgesehen.

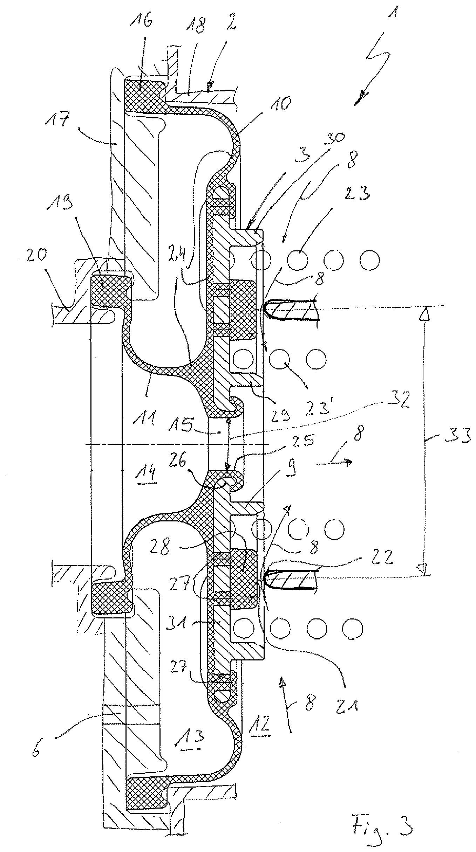

Im Ventilgehäuse 2 ist ein in den Fig. 1 und 3 durch Pfeile angedeuteter Gaspfad 8 ausgebildet, der die erste Öffnung 4 mit der zweiten Öffnung 5 verbindet, so dass bei geöffnetem Ventilglied 3 Gas von der zweiten Öffnung 5 durch das Ventilgehäuse 2 zur ersten Öffnung 4 strömen kann. Das Ventilglied 3 steuert in Abhängigkeit seiner Hubverstellung einen durchströmbaren Querschnitt dieses Gaspfads 8.

Das Ventilglied 3 weist einen Trägerkörper 9 und zwei Membranen auf, nämlich eine erste Membran 10 und eine zweite Membran 11. Die erste Membran 10 trennt im Ventilgehäuse 2 einen ersten Raum 12 von einem zweiten Raum 13 gasdicht ab. Der erste Raum 12 kommuniziert zumindest bei geöffnetem Ventilkörper 3 mit der ersten Öffnung 4 und mit der zweiten Öffnung 5. Der zweite Raum 13 kommuniziert mit der dritten Öffnung 6. Im Unterschied dazu trennt die zweite Membran 11 im Ventilgehäuse 2 den zweiten Raum 13 gasdicht von einem dritten Raum 14. Der dritte Raum 14 kommuniziert durch das Ventilglied 3 hindurch mit dem ersten Raum 12. Hierzu weist das Ventilglied 3 eine Verbindungsöffnung 15 auf, die das Ventilglied 3 hier zentral durchsetzt.

Die erste Membran 10 weist eine erste Dichtung 16 auf, die mit dem Ventilgehäuse 2 zusammenwirkt. Beispielsweise ist diese erste Dichtung 16 mit Hilfe eines Gehäusedeckels 17 mit einem Basisgehäuse 18 verschraubt. Außerdem besitzt die zweite Membran 11 eine zweite Dichtung 19, die mit dem Ventilgehäuse 2 zusammenwirkt. Die zweite Dichtung 19 kann hierzu beispielsweise mit Hilfe eines Zusatzdeckels 20 mit dem Gehäusedeckel 17 oder mit dem Basisgehäuse 18 verschraubt sein. Über die Dichtungen 16, 19 ist die jeweilige Membran 10, 11 am Ventilgehäuse 2 befestigt. Gleichzeitig wird hierüber eine Aufhängung des Ventilkörpers 3 im Ventilgehäuse 2 realisiert, die Hubverstellungen in der Hubrichtung x des Ventilkörpers 3 relativ zum Ventilgehäuse 2 ermöglicht. Dabei ist die erste Dichtung 16 integral an der ersten Membran 10 bzw. am Membrankörper 24 ausgeformt: Ebenso ist auch die zweite Dichtung 19 integral an der zweiten Membran 11 bzw. am Membrankörper 24 ausgeformt.

Der Ventilkörper 3 besitzt eine Steuerkontur 21, die mit einer dem Ventilkörper 3 zugewandten Einfassung 22 der ersten Öffnung 4 zusammenwirkt. Die Einfassung 22 bildet im Beispiel einen Ventilsitz, relativ zu dem der Ventilkörper 3 mit seiner Steuerkontur 21 verstellbar ist. In Abhängigkeit des in der Hubrichtung x gemessenen Abstands zwischen der Steuerkontur 21 und der Einfassung 22 steuert der Ventilkörper 3 bzw. seine Steuerkontur 21 den durchströmbaren Querschnitt des Gaspfads 8. Denn das Gas muss, um von der zweiten Öffnung 5 zur ersten Öffnung 4 zu gelangen, die Einfassung 22 überströmen. Gemäß einer bevorzugten Ausführungsform sind nun die genannte Einfassung 22 und die zweite Membran 11 so aufeinander abgestimmt, dass eine Querschnittsfläche A₃ der Einfassung 22 etwa gleich groß ist wie eine Querschnittsfläche A₂ der zweiten Membran 11. Der Ausdruck "etwa gleich groß" bedeutet in vorliegendem Zusammenhang, dass die Abweichung zwischen den beiden Querschnittsflächen A₂ und A₃ kleiner oder gleich 10 % ist.

Bei der in Fig. 1 gezeigten Offenstellung des Ventilglieds 32 wirken am Ventilkörper 3 entgegengesetzt angreifende Druckkräfte, die durch den im ersten Raum 12 an der ersten Membran 10 angreifenden Druck und den im zweiten Raum 13 an der ersten Membran 10 angreifenden Druck gebildet werden. Die Differenz dieser entgegengesetzt wirkenden Druckkräfte ergibt eine resultierende Schließkraft F₁.

Gleichzeitig wirkt eine Öffnungskraft F₂ am Ventilglied 3. Diese entsteht durch die Druckdifferenz zwischen dem an der zweiten Membran 11 im dritten Raum 14 herrschenden Druck und dem an der zweiten Membran 11 im zweiten Raum 13 herrschenden Druck. Da der dritte Raum 14 über die Verbindungsöffnung 15 mit dem ersten Raum 12 kommuniziert, liegt hier ein Druckausgleich vor, wodurch die Querschnittsfläche A₂ der zweiten Membran 11 von einer Querschnittsfläche A₁ der ersten Membran 10 hinsichtlich ihrer Schließwirkung abzuziehen ist. Diese Öffnungskraft F₂ ist üblicherweise noch durch wenigstens eine in den Fig. 1 und 2 nicht dargestellte Öffnungsdruckfeder verstärkt.

Bei der in Fig. 2 gezeigten theoretischen Schließstellung kommt das Ventilglied 3 mit seiner Steuerkontur 21 an der Einfassung 22 zur Einlage, wodurch die erste Öffnung 4 im Bereich der Einfassung 22 durch das Ventilglied 3 verschlossen wird. Der an der ersten Öffnung 4 anliegende Unterdruck liegt dann automatisch auch im dritten Raum 14 vor. Wenn die Querschnittsfläche A₂ der zweiten Membran 11 etwa gleich groß ist wie die Querschnittsfläche A₃ der Einfassung 22, ist der an der ersten Öffnung 4 herrschende Unterdruck quasi wirkungslos für die am Ventilglied 3 angreifenden Kräfte. Die am Ventilkörper 3 dann wirksame resultierende Kraft ergibt sich dann aus der Druckdifferenz zwischen dem an der zweiten Öffnung 5 anliegenden Druck und dem im zweiten Raum 13 herrschenden Druck. Außerdem kann zumindest eine in Fig. 3 dargestellte Öffnungsdruckfeder 23 bzw. 23' vorgesehen sein, die das Ventilglied 3 in dessen Offenstellung vorspannt. Durch diese Entkopplung von dem in der ersten Öffnung 4 anliegenden Druck kann eine Schaltkennlinie oder Regelkennlinie des Druckregelventils 1 sehr präzise ausgelegt werden, insbesondere auch für vergleichsweise große Druckdifferenzen zwischen der ersten Öffnung 4 und der dritten Öffnung 6. Insbesondere kann dadurch auch bei einem großen Unterdruck an der ersten Öffnung 4 ein gewünschter Unterdruck an der zweiten Öffnung 5 eingestellt werden. Beispielsweise lässt sich dies über eine entsprechende, progressive Federkennlinie der jeweiligen Öffnungsdruckfeder 23, 23' realisieren.

Während die Fig. 1 und 2 zur Erläuterung der Funktionsweise des Druckregelventils 1 das Ventilglied 3 in einer vereinfachten Darstellung wiedergeben, zeigt Fig. 3 ein erfindungsgemäß ausgestaltetes Ventilglied 3 bzw. ein Ventilglied 3, das beim erfindungsgemäßen Druckregelventil 1 zum Einsatz kommt. Das Druckregelventil 1 bzw. das Ventilglied 3 charakterisiert sich dadurch, dass die erste Membran 10 und die zweite Membran 11 an den Trägerkörper 9 angespritzt sind und zwar derart, dass dadurch ein einziger Membrankörper 24 gebildet wird, an dem beide Membranen 10, 11 integral ausgeformt sind. Der so einteilig hergestellte oder monolithische Membrankörper 24 umfasst vorzugsweise einen zentral angeordneten Hülsenabschnitt 25, der ebenfalls integral am Membrankörper 24 ausgeformt ist. Der Hülseabschnitt 25 bildet dabei eine Einfassung für die Verbindungsöffnung 15. Dementsprechend umgreift der Hülsenabschnitt 25 einen am Trägerkörper 9 ausgebildeten Öffnungsrand 26, der die Verbindungsöffnung 15 einfasst. Der Trägerkörper 9 besitzt zweckmäßig mehrere Durchbrüche 27, die beim Anspritzen des Membrankörpers 24 vom Werkstoff des Membrankörpers 24 durchdrungen werden, wodurch sich zusätzlich zu einer adhäsiven Verbindung außerdem eine formschlüssige Verbindung zwischen dem Trägerkörper 9 und dem Membrankörper 24 realisieren lässt. Der Membrankörper 24 kann außerdem einen Steuerabschnitt 28 aufweisen, der an einer dem ersten Raum 12 zugewandten Seite des Trägerkörpers 9 angeordnet ist und an dem die Steuerkontur 21 ausgebildet ist. Insoweit ist die Steuerkontur 21 integral am Membrankörper 24 ausgeformt. Der Steuerabschnitt 28 erstreckt sich ebenso wie die Steuerkontur 21 koaxial zur Verbindungsöffnung 15. Jedenfalls befindet sich die Verbindungsöffnung 15 innerhalb der ringförmig geschlossenen Steuerkontur 21. Auf diese Weise ist gewährleistet, dass der dritte Raum 14 über die Verbindungsöffnung 15 auch dann mit demjenigen Teil des ersten Raums 12 in Verbindung steht, der mit der ersten Öffnung 4 kommuniziert, wenn die Steuerkontur 21 in der Schließstellung des Ventilkörpers 3 dicht an der Einfassung 22 anliegt. Hierdurch neutralisieren sich die Druckkräfte beiderseits des Ventilkörpers 3 im Sitzbereich, der durch das Zusammenspiel der Steuerkontur 21 mit der Einfassung 22 gebildet ist.

Der Trägerkörper 9 besitzt, insbesondere zur Aussteifung, einen ringförmigen Innenkragen 29 sowie einen ringförmigen Außenkragen 30, die sich koaxial zueinander und koaxial zur Verbindungsöffnung 15 erstrecken. Die beiden Kragen 29, 30 stehen dabei an einer dem ersten Raum 12 zugewandten Seite vom übrigen Trägerkörper 9 ab, der im wesentlichen durch eine die Verbindungsöffnung 15 enthaltende ebene Ringscheibe 31 gebildet ist. Der Steuerabschnitt 28 des Membrankörpers 24 erstreckt sich ringförmig zwischen den beiden Kragen 29, 30, wobei im gezeigten Beispiel sowohl zum Innenkragen 29 als auch zum Außenkragen 30 jeweils ein radialer Abstand vorgesehen ist. Im Bereich dieses Abstands, also radial zwischen dem Steuerabschnitt 28 und dem jeweiligen Kragen 29, 30 stützt sich die Öffnungsdruckfeder 23 bzw. 23' am Trägerkörper 9 bzw. am Ventilglied 3 ab. Sofern nur eine Öffnungsdruckfeder 23, 23' vorgesehen ist, kann sich diese radial außerhalb der Einfassung 22 am Ventilglied 3 abstützen. Alternativ kann sich die Öffnungsdruckfeder 23' radial innerhalb der Einfassung 22 am Ventilglied 3 abstützen. Ebenso können zwei Öffnungsdruckfedern 23, 23' vorgesehen sein, die sich wie gezeigt innerhalb und außerhalb der Einfassung 22 am Ventilkörper 3 abstützen.

Bei der hier gezeigten Ausführungsform ist der Membrankörper 24 so gespritzt, dass er den zweiten Raum 13 von der ersten Dichtung 16 bis zur zweiten Dichtung 19 unterbrechungsfrei begrenzt. Hierdurch ergibt sich eine besonders effektive Abdichtung des zweiten Raums 13, gegenüber dem ersten Raum 12 und gegenüber dem dritten Raum 14. Leckagen sind quasi nur noch über die Dichtungen 16, 19 möglich, die sich jedoch mit einer effektiven Dichtungswirkung realisieren lassen. Des weiteren ist der Membrankörper 24 optional so ausgestaltet, dass er den dritten Raum 14 von der zweiten Dichtung 19 bis zur Verbindungsöffnung 15 unterbrechungsfrei begrenzt. Auch dies unterstützt eine effektive Dichtungswirkung. Zu diesem Zweck geht die zweite Membran 11 unmittelbar in den Hülsenabschnitt 25 über, der die Verbindungsöffnung 15 einfasst.

Die Verbindungsöffnung 15 besitzt eine Querschnittsfläche 32, die insbesondere kreisförmig geformt sein kann. Grundsätzlich sind auch andere Querschnittsgeometrien denkbar. Der durch die Steuerkontur 21 und die Einfassung 22 gebildete Ventilsitz besitzt eine Querschnittsfläche 33, die der Querschnittsfläche der Einfassung 22 sowie der Querschnittsfläche der Steuerkontur 21 entspricht. Auch diese Querschnittsfläche 33 ist bevorzugt kreisförmig ausgestaltet, kann grundsätzlich jedoch auch andere Geometrien besitzen. Erkennbar ist die Querschnittsfläche 32 der Verbindungsöffnung 15 kleiner als die Querschnittsfläche 33 des Sitzes. Bevorzugt ist die Querschnittsfläche 32 der Verbindungsöffnung 15 jedoch nicht beliebig klein gewählt, sondern mit Bezug auf die Querschnittsfläche 33 des Sitzes mit einer Mindestgröße gewählt. Bevorzugt beträgt die Querschnittsfläche 32 der Verbindungsöffnung 15 mindestens 1/25 der Querschnittsfläche 33 des Sitzes. Bevorzugt beträgt die Querschnittsfläche 32 der Verbindungsöffnung 15 maximal 1/4 der Querschnittsfläche 33 des Sitzes. Bei kreisförmigen Querschnitten entspricht dies einem Durchmesserverhältnis von mindestens 1:5 bis maximal 1:2. Durch einen großen Öffnungsquerschnitt der Verbindungsöffnung 15 kann die Gefahr einer Vereisung der Verbindungsöffnung 15 reduziert werden, da Wasser einfach abfließen kann.

## Patentansprüche

1. Druckregelventil, insbesondere zum Einstellen eines Unterdrucks in einem Kurbelgehäuse einer Brennkraftmaschine,
- mit einem Ventilgehäuse (2), das eine erste Öffnung (4) und eine zweite Öffnung (5) aufweist,
- mit einem Ventilglied (3), das zum Steuern eines durchströmbaren Querschnitts eines die erste Öffnung (4) mit der zweiten Öffnung (5) verbindenden Gaspfads (8) hubverstellbar im Ventilgehäuse (2) angeordnet ist,
- wobei das Ventilglied (3) einen Trägerkörper (9) mit einer ersten Membran (10) und einer zweiten Membran (11) aufweist,
- wobei die erste Membran (10) im Ventilgehäuse (2) einen mit der ersten Öffnung (4) und der zweiten Öffnung (5) kommunizierenden ersten Raum (12) gasdicht von einem zweiten Raum (13) trennt, der mit einer dritten Öffnung (6) des Ventilgehäuses (2) kommuniziert,
- wobei die zweite Membran (11) im Ventilgehäuse (2) den zweiten Raum (13) gasdicht von einem dritten Raum (14) trennt, der durch das Ventilglied (3) hindurch mit dem ersten Raum (12) kommuniziert,
- wobei die erste Membran (10) und die zweite Membran (11) an einem an den Trägerkörper (9) angespritzten einteiligen Membrankörper (24) integral ausgeformt sind,
- wobei der Ventilkörper (3) eine Steuerkontur (21) aufweist, die in Abhängigkeit ihres Abstands von einer dem Ventilkörper (3) zugewandten Einfassung (22) der ersten Öffnung (4) den durchströmbaren Querschnitt des Gaspfads (8) steuert,
- wobei die Steuerkontur (21) integral am Membrankörper (24) ausgeformt ist,
- wobei die Steuerkontur (21) an einem Steuerabschnitt (28) des Membrankörpers (24) ausgebildet ist,
- wobei mindestens eine Öffnungsdruckfeder (23, 23') vorgesehen ist, die sich am Ventilgehäuse (2) und am Trägerkörper (9) des Ventilglieds (3) abstützt,
**dadurch gekennzeichnet,**
- **dass** der Steuerabschnitt (28) des Membrankörpers (24) an einer dem ersten Raum (12) zugewandten Seite des Trägerkörpers (9) angeordnet ist,
- **dass** der Trägerkörper (9) Durchbrüche (27) aufweist, die vom angespritzten Membrankörper (24) durchdrungen sind, derart, dass der Membrankörper (24) auf der einen Seite des Trägerkörpers (9) die Membranen (10, 11) aufweist und auf der anderen Seite des Trägerkörpers (9) den Steuerabschnitt (28) aufweist,
- **dass** der Trägerkörper (9) einen ringförmigen Innenkragen (29) sowie einen ringförmigen Außenkragen (30) aufweist, die sich koaxial zueinander und koaxial zum Steuerabschnitt (28) an der dem ersten Raum zugewandten Seite des Trägerkörpers (9) erstrecken,
- **dass** der Steuerabschnitt (28) radial zwischen dem Innenkragen (29) und dem Außenkragen (30) angeordnet ist,
- **dass** sich die jeweilige Öffnungsdruckfeder (23, 23') radial zwischen dem Steuerabschnitt (28) und dem Innenkragen (29) oder radial zwischen dem Steuerabschnitt (28) und dem Außenkragen (30) am Trägerkörper (9) abstützt.

2. Druckregelventil nach Anspruch 1,
**dadurch gekennzeichnet,**
- **dass** die erste Membran (10) eine mit dem Ventilgehäuse (2) zusammenwirkende erste Dichtung (16) aufweist,
- **dass** die zweite Membran (11) eine mit dem Ventilgehäuse (2) zusammenwirkende zweite Dichtung (19) aufweist,
- **dass** der Membrankörper (24) den zweiten Raum (13) von der ersten Dichtung (16) bis zur zweiten Dichtung (19) unterbrechungsfrei begrenzt.

3. Druckregelventil nach einem der Ansprüche 1 und 2,
**dadurch gekennzeichnet,**
**dass** eine Querschnittsfläche (A₃) der Einfassung (22) etwa gleich groß ist wie eine Querschnittsfläche (A₂) der zweiten Membran (11).

4. Druckregelventil nach einem der Ansprüche 1 bis 3,
**dadurch gekennzeichnet,**
**dass** das Ventilglied (3) eine Verbindungsöffnung (15) aufweist, die den ersten Raum (12) mit dem dritten Raum (14) kommunizierend verbindet.

5. Druckregelventil nach Anspruch 4, **dadurch gekennzeichnet,**
**dass** die Steuerkontur (21) die Verbindungsöffnung (15) einfasst.

6. Druckregelventil nach Anspruch 4 oder 5,
**dadurch gekennzeichnet,**
**dass** der Membrankörper (24) den dritten Raum (14) von einer an der zweiten Membran (11) ausgebildeten, mit dem Ventilgehäuse (2) zusammenwirkenden (zweiten) Dichtung (19) bis zur Verbindungsöffnung (15) unterbrechungsfrei begrenzt.

7. Druckregelventil nach einem der Ansprüche 4 bis 6,
**dadurch gekennzeichnet,**
**dass** die Verbindungsöffnung (15) von einem integral am Membrankörper (24) ausgeformten Hülsenabschnitt (25) eingefasst ist.

8. Druckregelventil nach einem der Ansprüche 4 bis 7,
**dadurch gekennzeichnet,**
**dass** die Verbindungsöffnung (15) eine Querschnittsfläche (32) aufweist, die mindestens 1/25 bis 1/4 der Querschnittsfläche (33) einer Einfassung (22) der ersten Öffnung (4) beträgt, mit der das Ventilglied (3) zum Steuern des durchströmbaren Querschnitts des Gaspfads (8) zusammenwirkt.

9. Kurbelgehäuseentlüftungsdruckregelventil mit den Merkmalen mindestens eines der Ansprüche 1 bis 8,
- wobei die erste Öffnung (4) zum Anschließen an eine Frischluft zur Brennkraftmaschine transportierende Frischluftleitung vorgesehen ist,
- wobei die zweite Öffnung (5) zum Anschließen an ein Kurbelgehäuse der Brennkraftmaschine vorgesehen ist,
- wobei die dritte Öffnung (6) mit der Umgebung (7) des Druckregelventils (1) kommuniziert.

## Claims

1. Pressure control valve, in particular for adjusting negative pressure in a crankcase of an internal combustion engine,
- with a valve housing (2), which comprises a first opening (4) and a second opening (5),
- with a valve member (3), which is arranged to be stroke-adjustable in the valve housing (2) for controlling the throughflow cross-section of a gas pathway (8) connecting the first opening (4) to the second opening (5),
- wherein the valve member (3) comprises a support body (9) with a first membrane (10) and a second membrane (11),
- wherein the first membrane (10) in the valve housing (2) separates in a gas-tight manner a first chamber (12), which communicates with the first opening (4) and the second opening (5), from a second chamber (13), which communicates with a third opening (6) of the valve housing (2),
- wherein the second membrane (11) in the valve housing (2) separates in a gas-tight manner the second chamber (13) from a third chamber (14), which communicates through the valve member (3) with the first chamber (12),
- wherein the first membrane (10) and the second membrane (11) are formed to be integral with a one-piece membrane body (24) moulded onto the support body (9),
- wherein the valve body (3) comprises a control contour (21), which, as a function of its distance from an edging (22) of the first opening (4) facing the valve body (3), controls the throughflow cross-section of the gas pathway (8),
- wherein the control contour (21) is formed to be integral with the membrane body (24),
- wherein the control contour (21) is formed on a control section (28) of the membrane body (24),
- wherein at least one opening compression spring (23, 23') is provided which is supported on the valve housing (2) and on the support body (9) of the valve member (3), **characterised in that**
- the control section (28) of the membrane body (24) is arranged on a side of the support body (9) facing the first chamber (12),
- the support body (9) comprises openings (27) which are penetrated by the moulded membrane body (24) such that the membrane body (24) comprises the membranes (10, 11) on one side of the support body (9) and comprises the control section (28) on the other side of the support body (9),
- the support body (9) comprises an annular inner collar (29) and an annular outer collar (30) which extend coaxially relative to one another and coaxially to the control section (28) on the side of the support body (9) facing the first chamber,
- the control section (28) is arranged radially between the inner collar (29) and the outer collar (30),
- the respective opening compression spring (23, 23') is supported radially between the control section (28) and the inner collar (29) or radially between the control section (28) and the outer collar (30) on the support body (9).

2. Pressure control valve according to claim 1, **characterised in that**
- the first membrane (10) comprises a first seal (16) cooperating with the valve housing (2),
- the second membrane (11) comprises a second seal (19) cooperating with the valve housing (2),
- the membrane body (24) delimits the second chamber (13) from the first seal (16) to the second seal (19) without interruption.

3. Pressure control valve according to claim 1 and 2, **characterised in that** a cross-sectional area (A₃) of the edging (22) is approximately the same as the cross-sectional area (A₂) of the second membrane (11).

4. Pressure control valve according to any of claims 1 to 3, **characterised in that** the valve member (3) comprises a connection opening (15), which connects the first chamber (12) to the third chamber (14) in a communicative manner.

5. Pressure control valve according to claim 4, **characterised in that** the control contour (21) borders the connection opening (15).

6. Pressure control valve according to claim 4 or 5, **characterised in that** the membrane body (24) delimits the third chamber (14) with a (second) seal (19) formed on the second membrane (11) and cooperating with the valve housing (2) up to the connection opening (15) without interruption.

7. Pressure control valve according to any of claims 4 to 6, **characterised in that** the connection opening (15) is bordered by a sleeve section (25) formed integrally on the membrane body (24).

8. Pressure control valve according to any of claims 4 to 7, **characterised in that** the connection opening (15) has a cross-sectional area (32) which is at least 1/25 to 1/4 of the cross-sectional area (33) of an edging (22) of the first opening (4), with which the valve member (3) cooperates for controlling the throughflow cross-section of the gas pathway (8).

9. Crankcase ventilation pressure control valve having the features of at least one of claims 1 to 8,
- wherein the first opening (4) is provided for connecting to a fresh air duct transporting fresh air to the internal combustion engine,
- wherein the second opening (5) is provided for connecting to a crankcase of the internal combustion engine,
- wherein the third opening (6) communicates with the surrounding area (7) of the pressure control valve (1).

## Revendications

1. Soupape de réglage de pression, en particulier servant à régler une dépression dans un carter de vilebrequin d'un moteur à combustion interne,
- avec un carter de soupape (2), qui présente une première ouverture (4) et une deuxième ouverture (5),
- avec un organe de soupape (3), qui est disposé dans le carter de soupape (2) de manière mobile en translation afin de commander une section transversale pouvant être parcourue d'un trajet de gaz (8) reliant la première ouverture (4) à la deuxième ouverture (5),
- dans lequel l'organe de soupape (3) présente un corps de support (9) avec une première membrane (10) et une deuxième membrane (11),
- dans lequel la première membrane (10) sépare dans le carter de soupape (2) un premier espace (12) communiquant avec la première ouverture (4) et la deuxième ouverture (5) de manière étanche aux gaz d'un deuxième espace (13), qui communique avec une troisième ouverture (6) du carter de soupape (2),
- dans lequel la deuxième membrane (11) sépare dans le carter de soupape (2) le deuxième espace (13) de manière étanche aux gaz d'un troisième espace (14), qui communique avec le premier espace (12) au travers de l'organe de soupape (3),
- dans lequel la première membrane (10) et la deuxième membrane (11) sont formées intégralement au niveau d'un corps de membrane (24) d'un seul tenant pulvérisé au niveau du corps de support (9),
- dans lequel le corps de soupape (3) présente un contour de commande (21), qui commande, en fonction de sa distance d'une bordure (22), tournée vers le corps de soupape (3), de la première ouverture (4), la section transversale pouvant être parcourue du trajet de gaz (8),
- dans lequel le contour de commande (21) est formé intégralement au niveau du corps de membrane (24),
- dans lequel le contour de commande (21) est réalisé au niveau d'une section de commande (28) du corps de membrane (24),
- dans lequel au moins un ressort de pression d'ouverture (23, 23') est prévu, lequel prend appui au niveau du carter de soupape (2) et au niveau du corps de support (9) de l'organe de soupape (3),
**caractérisée en ce**
- **que** la section de commande (28) du corps de membrane (24) est disposée au niveau d'un côté, tourné vers le premier espace (12), du corps de support (9),
- **que** le corps de support (9) présente des ajours (27), qui sont traversés par le corps de membrane (24) pulvérisé de telle manière que le corps de membrane (24) présente sur un côté du corps de support (9) les membranes (10, 11) et présente sur l'autre côté du corps de support (9, la section de commande (28),
- **que** le corps de support (9) présente un collet intérieur (29) annulaire ainsi qu'un collet extérieur (30) annulaire, qui s'étendent de manière coaxiale l'un par rapport à l'autre et de manière coaxiale par rapport à la section de commande (28) au niveau du côté, tourné vers le premier espace, du corps de support (9),
- **que** la section de commande (28) est disposée de manière radiale entre le collet intérieur (29) et le collet extérieur (30),
- **que** le ressort de pression d'ouverture (23, 23') respectif prend appui de manière radiale entre la section de commande (28) et le collet intérieur (29) ou de manière radiale entre la section de commande (28) et le collet extérieur (30) au niveau du corps de support (9).

2. Soupape de réglage de pression selon la revendication 1,
**caractérisée en ce**
- **que** la première membrane (10) présente un premier joint d'étanchéité (16) coopérant avec le carter de soupape (2),
- **que** la deuxième membrane (11) présente un deuxième joint d'étanchéité (19) coopérant avec le carter de soupape (2),
- **que** le corps de membrane (24) délimite le deuxième espace (13) sans interruption du premier joint d'étanchéité (16) jusqu'au deuxième joint d'étanchéité (19).

3. Soupape de réglage de pression selon l'une quelconque des revendications 1 et 2,
**caractérisée en ce**
**qu'**une surface de section transversale (A₃) de la bordure (22) est à peu près aussi grande qu'une surface de section transversale (A₂) de la deuxième membrane (11).

4. Soupape de réglage de pression selon l'une quelconque des revendications 1 à 3,
**caractérisée en ce**
**que** l'organe de soupape (3) présente une ouverture de liaison (15), qui relie par communication le premier espace (12) au troisième espace (14).

5. Soupape de réglage de pression selon la revendication 4,
**caractérisée en ce**
**que** le contour de commande (21) borde l'ouverture de liaison (15).

6. Soupape de réglage de pression selon la revendication 4 ou 5,
**caractérisée en ce**
**que** le corps de membrane (24) délimite le troisième espace (14) sans interruption d'un (deuxième) joint d'étanchéité (19) réalisé au niveau de la deuxième membrane (11), coopérant avec le carter de soupape (2) jusqu'à l'ouverture de liaison (15).

7. Soupape de réglage de pression selon l'une quelconque des revendications 4 à 6,
**caractérisée en ce**
**que** l'ouverture de liaison (15) est bordée par une section de douille (25) formée intégralement au niveau du corps de membrane (24).

8. Soupape de réglage de pression selon l'une quelconque des revendications 4 à 7,
**caractérisée en ce**
**que** l'ouverture de liaison (15) présente une surface de section transversale (32), qui représente au moins 1/25 à 1/4 de la surface de section transversale (33) d'une bordure (22) de la première ouverture (4), avec laquelle l'organe de soupape (3) coopère afin de commander la section transversale pouvant être parcourue du trajet de gaz (8).

9. Soupape de réglage de pression de purge d'un carter de vilebrequin avec les caractéristiques d'au moins une des revendications 1 à 8,
- dans laquelle la première ouverture (4) est prévue pour être raccordée à un conduit d'air frais transportant un air frais au moteur à combustion interne,
- dans laquelle la deuxième ouverture (5) est prévue pour être raccordée à un carter de vilebrequin du moteur à combustion interne,
- dans laquelle la troisième ouverture (6) communique avec l'environnement (7) de la soupape de régulation de pression (1).
